# EUROPÄISCHE PATENTSCHRIFT

(11) **EP 1 027 148 B1**
(45) Veröffentlichungstag und Bekanntmachung des Hinweises auf die Patenterteilung: **09.01.2002**
(21) Anmeldenummer: 98951153.0
(22) Anmeldetag: 06.11.1998
(51) Int. Cl.: B01J 19/00, F16L 39/02, B01L 3/00, B01L 9/06, B01L 7/00, B01F 11/00

(54) **VORRICHTUNG ZUR HALTERUNG VON TEMPERIER- UND SCHÜTTELBAREN REAKTIONSGEFÄSSEN**
DEVICE FOR HOLDING REACTION VESSELS WHICH CAN BE THERMALLY ADJUSTED AND AGITATED
DISPOSITIF POUR LA FIXATION DE RECIPIENTS REACTIONNELS COMPORTANT DES MOYENS THERMOSTATIQUES ET D'AGITATION

(30) Priorität: 08.11.1997 CH 257797
(43) Veröffentlichungstag der Anmeldung: 16.08.2000
(73) Patentinhaber: Chemspeed Ltd., 4302 Augst (CH)
(72) Erfinder: GÜLLER, Rolf, CH-5027 Herznach (CH); MUNCH, Seraphin, F-68170 Rixheim (FR); JABLONSKI, Philippe, F-68300 Saint Louis (FR); TSCHIRKY, Hansjörg, CH-4107 Ettingen (CH)
(74) Vertreter: Bollhalder, Renato
(86) Internationale Anmeldenummer: CH9800477
(87) Internationale Veröffentlichungsnummer: WO9924160

(56) Entgegenhaltungen:
- WO-A-93/24233
- WO-A-97/09353
- DE-A- 3 220 879
- DE-C- 4 214 866
- FR-A- 2 372 740
- FR-A- 2 453 405
- US-A- 5 503 805
- PATENT ABSTRACTS OF JAPAN vol. 17, no. 373 (C-1083), 14. Juli 1993 & JP 05 059374 A (TONEN CORP.), 9. März 1993

## Beschreibung

### Anwendungsgebiet der Erfindung

Die vorliegende Erfindung bezieht sich auf eine in der Forschung verwendbare Vorrichtung mit einem Reaktionsgefäss, vorzugsweise mit einer Vielzahl von in einem Block zusammengefassten Reaktionsgefässen, zur parallelen und/oder seriellen Durchführung von chemischen, biochemischen oder physikalischen Experimenten. Bei vielen Experimenten sind eine Temperierung des Reaktionsgefässes, z.B. im Bereich zwischen -70 °C und +200 °C, mit zugleich erfolgender Schüttelbewegung während gleichzeitigem Zudosieren in ein geschlossenes Reaktionsgefäss erforderlich. Damit ergeben sich besondere apparative Anforderungen.

### Stand der Technik

Beispielsweise in der chemischen Forschung der Pharmaindustrie oder in der universitären Forschung steht zunehmend im Vordergrund, möglichst schnell eine grosse Anzahl von potentiellen Wirkstoffen bzw. -kombinationen ausfindig zu machen und diese dann zu testen. Ein Sektor der chemischen Forschung bezieht sich daher heutzutage auf kombinatorische Chemie, parallele Synthese und Hochgeschwindigkeitschemie. Von zentraler Bedeutung ist hierbei die Möglichkeit, bekannte oder neue chemische Reaktionstypen unter minimalem Anpassungsaufwand in grosser Breite parallel einsetzen zu können.

Daher wurden verschiedene Vorrichtungen mit parallel angeordneten, temperierbaren Reaktionsgefässen zur parallelen Durchführung einer Vielzahl von Experimenten geschaffen. In der einfachsten Gestalt benutzte man offene Ölbäder, in denen der Block von Reaktionsgefässen so eingehängt ist, dass dieser geschüttelt werden kann. Als gravierendster Nachteil solcher Aufbauten gilt der eng beschränkte Temperaturbereich als Folge des offenen Temperierbades gegenüber einem geschlossenen Kreislauf. Ein weiterer essentieller Nachteil ist die Unmöglichkeit, während der Schüttelbewegung in die verschlossenen Reaktionsgefässe mit einer Zugabevorrichtung, wie z.B. einer Nadel, z.B. die Lösung von einem Reagens, zudosieren zu können. Weitere geschaffene temperierbare Vorrichtungen sind nur für spezielle Anwendungen geeignet, zumeist kompliziert aufgebaut, übermässig gross, wenig bedienungsfreundlich oder erlauben kaum eine Automatisierung einzelner Verfahrensschritte.

Aus der DE-A-32 20 879 ist eine Vorrichtung zur Halterung von temperierbaren und mittels einer Schütteleinrichtung schüttelbaren Reaktionsgefässen bekannt. Die Reaktionsgefässe sind oben jeweils mittels einer elastischen Kupplung gehaltert und unten in Ausnehmungen von elastischen Auflagen gelagert. Zur Temperierung der Reaktionsgefässe ist oberhalb der elastischen Auflagen als Widerstandsheizung ein Aufnahmekörper mit Durchgangsbohrungen, durch die die unteren Enden der Reaktionsgefässe ragen, angeordnet. Die Temperierung der Reaktionsgefässe über den Aufnahmekörper und dazwischenliegende Luft ist bezüglich Effizienz noch verbesserungsfähig.

In der DE-C-42 14 866 ist eine weitere Vorrichtung zur Halterung von temperierbaren und mittels eines Schwingtellers schüttelbaren Reagenzgläsern offenbart. Mit dem Schwingteller ist ein Probenhalter verbunden, der an seiner Oberseite mit Kissen aus elastischem Material bestückt ist, in die die unteren Enden der Reagenzgläser eingreifen. Zwischen dem Schwingteller und dem Probenträger ist eine von Luft durchströmbare Heizplatte angeordnet. Damit die heisse Luft zum Aufheizen der Reagenzgläser nicht nach aussen entweicht, müssen diese von einem Mantel umgeben sein.

Eine verbesserte Vorrichtung hat die Firma Bohdan Europe, Frankreich, unter der Bezeichnung RAM Synthesizer BHD 1524 auf den Markt gebracht. Diese Vorrichtung umfasst einen wärmeleitenden Temperierblock mit einer Vielzahl von Vertiefungen. Ein zentraler Einlass ist vorgesehen, um den Temperierblock mit einem flüssigen Wärmeträger zu versorgen. In die Vertiefungen werden die an einer Matrize angeschraubten und mit Septen verschlossenen Reaktionsgefässe eingeführt, wobei die obere Matrize mit den angeschraubten Reaktionsgefässen am Temperierblock starr befestigt ist. Die erwärmende Temperierung der Reaktionsgefässe geschieht dabei durch Energiezufuhr vom Wärmeträger auf den Temperierblock hin zur Hülle des Reaktionsgefässes. Bei abkühlender Temperierung erfolgt durch das Temperaturgefälle zwischen der Hülle des Reaktionsgefässes und dem Wärmeträger über den wärmeableitenden Temperierblock ein Energietransfer vom Reaktionsgefäss hin zum Wärmeträger. Der gesamte Reaktionsblock ist auf eine Schütteleinrichtung aufgesetzt und kann somit geschüttelt sowie zugleich temperiert werden.

Nachteilig an der Vorrichtung RAM Synthesizer BHD 1524 ist, dass während des Schütteins - bei eventueller gleichzeitiger Temperierung - das einzelne Reaktionsgefäss nicht von einem typischerweise von einem Roboterarm geführten nadelförmigen Sampler penetriert werden kann, um Substanzen zuzugeben oder zu entnehmen. Jedoch gerade beim Zugeben von Substanzen ist das Schütteln des Reaktionsgefässes oftmals unabdingbar. Das Reaktionsgefäss muss zwangsläufig mit einem Septum verschlossen sein, so dass ein in das Reaktionsgefäss eingebrachter Sampler adäquat zur Frequenz und Amplitude der Schüttelbewegung des Reaktionsgefässes bewegt werden müsste. Bei einer z.B. üblichen Auslenkung des Reaktionsgefässes von 10 mm mit einer Rotation von 1000 Umdrehungen/Minute ist die synchrone Mitbewegung des Samplers praktisch ausgeschlossen und mit grossem Nachteil verbunden (Zentrifugalkräfte). Die vorbeschriebene Vorrichtung weist jedoch noch weitere Nachteile auf. Beim Schütteln muss der Reaktionsblock als Ganzes mit seinem gesamten Gewicht bewegt werden, was eine sehr stabile Apparatur (Fibrationen) sowie einen starken Antneb erfordert. Bei der Temperaturübertragung vom flüssigen Wärmeträger und der Wandung des Reaktionsgefässes ist als zeitverzögerndes und energieaufnehmendes Bauteil der Temperierblock zwischengeschaltet. Selbst bei sehr prätsen Vertiefungen und gleichzeitig sehr präzisen Reaktoren entsteht eine - wenn auch minimale -, aber stark isolierende Luftschicht zwischen Temperierblock und Reaktor.

### Aufgabe der Erfindung

Angesichts der aufgezeigten Nachteile liegt der Erfindung die Zielstellung zugrunde, eine Vorrichtung zu schaffen, wo ein einzelnes Reaktionsgefäss bzw. ein Block von Reaktionsgefässen möglichst verzögerungsfrei und varlustarm temperiert werden. Während des Temperierens muss ein Schütteln der Reaktionsgefässe mit der erforderlichen Intensität erfolgen können, wobei möglichst wenig die Reaktionsgefässe umgebende Masse zu bewegen ist Schliesslich muss es möglich sein, zeitlich mit dem Temperieren und Schütteln mit einem Sampler in die mit eventuell einem Septum verschlossenen Reaktionsgefässe Substanzen zuzudosieren oder Proben aus den Reaktionsgefässen zu entnehmen.

### Übersicht über die Erfindung

Die essentiellen Erfindungsmerkmale lassen sich wie folgt zusammenfassen: Die Vorrichtung zur Halterung eines temperier- und schüttelbaren Reaktionsgefässes ist vorzugsweise als Block mit einer Vielzahl zusammengefasster Reaktionsgefässe ausgebildet Ein Strömungskanal für die Zuleltung eines flüssigen Temoeriermediums ist an Reaktionsgefässe herangeführt und zur Bewegung der Reaktionsgefässe weist die Vorrichtung eine Schütteleinrichtung auf. Oben sind die Reaktionsgefässe an ihren Halspartien jeweils mittels einer elastischen Kupplung gehaltert und unterhalb ihrer Halspartien in elastischen Mitteln derart dicht gestützt, dass Rein über den Strömungskanal zugeleitetes flüssiges Temperiermedium entweichen kann. Die Schütteleinrichtung greift vorzugsweise an den unterhalb der Reaktionsgefässe stützenden elastischen Mitteln an.

Die elastische Kupplung besitzt eine im Prinzip holsenförmige Gestalt mit einem axialen Durchgang. Ihr oberes Ende kann zum Befestigen an einem Träger mit einem Aussengewinde versehen sein. Das untere Ende der Kupplung weist vorteilhaft einen Fixierbereich und ganz unten einen Normschliff auf. Zwischen dem oberen und dem unteren Ende liegt ein Faltenbalg. Das untere Ende ist zumindest anteilig, vorzugsweise mit dem Normschliff, in die Eintrittsöffnung der Halspartie des Reaktionsgefässes eingesteckt. Für die elastischen Mittel zur unteren Stützung der Reaktionsgefässe wurden mehrere Ausführungsformen entwickelt.

### • Erste Ausführungsform

Das die Reaktionsgefässe unterhalb ihrer Halspartien stützende elastische Mittel wird von einem Block mit einer Vielzahl sich von dessen Oberseite aufwärts erstreckenden zylindrischen, elastischen Wänden gebildet. Diese Wände stellen Aufnahmestutzen dar mit jeweils einer Einstecköffnung, die sich in den Block hinein als Loch fortsetzt. Jedes Loch ist zur Aufnahme der Bodenpartie eines Reaktionsgefässes und jede zugehörige elastische Wand ist zum radialen partiellen Umgreifen dieses Reaktionsgefässes bestimmt. Zu jedem Loch ist der Strömungskanal für die Zuleitung des Temperiermediums geführt, welches aus dem Strömungskanal ausströmt und das jeweilige Reaktionsgefäss umspült.

### • Zweite Ausführungsform

Das die Reaktionsgefässe unterhalb ihrer Halspartien stützende elastische Mittel wird von einem Block mit einer Vielzahl sich von dessen Oberseite aufwärts erstreckenden und von dessen Unterseite sich abwärts erstreckenden zylindrischen, elastischen Wänden gebildet. Die Wände auf der Ober- und der Unterseite stellen zueinander fluchtende Aufnahmestutzen dar und weisen jeweils einen Vertikaldurchgang auf, um darin jeweils die Mittelpartie eines Reaktionsgefässes aufzunehmen. Die Bodenpartien der Reaktionsgefässe ragen aus den unteren elastischen Wänden heraus, während die Halspartien aus den oberen elastischen Wänden herausragen. Jede elastische Wand ist zum radialen partiellen Umgreifen des eingesteckten Reaktionsgefässes bestimmt. Zu jedem Vertikaldurchgang ist der Strömungskanal für die Zuleitung des Temperiermediums geführt, welches aus dem Strömungskanal ausströmt und das jeweilige Reaktionsgefäss umspült.

Sowohl bei der ersten als auch bei der zweiten Ausführungsform beginnt der Strömungskanal an zumindest einem Eintritt am Block und endet an zumindest einem Austritt. Der Strömungskanal setzt sich von einem Loch zum benachbarten Loch bzw, von einem Vertikaldurchgang zum benachbarten Vertikaldurchgang fort. Vorteilhaft besteht der gesamte Block aus elastischem Material.

### • Dritte Ausführungsform

Das die Reaktionsgefässe unterhalb ihrer Halspartien stützende elastische Mittel wird von einem Block mit einer Vielzahl sich von dessen Oberseite aufwärts erstreckenden zylindrischen, elastischen Kupplungen gebildet, die zumindest die Bodenpartie des jeweiligen Reaktionsgefässes aufnehmen und radial umgreifen. Der Strömungskanal für die Zuleitung des Temperiermediums, welches das jeweilige Reaktionsgefäss umspült, ist in das Innere jeder Kupplung geführt.

Die elastische Kupplung besitzt eine im Prinzip hülsenförmige Gestalt und einen axialen Durchgang. Ein oberes Muffenstück an der Kupplung hat eine Dichtfläche zum abgedichteten Umgreifen des Reaktionsgefässes, das eine komplementäre Dichtfläche aufweist. Unten schliesst die Kupplung mit einem Aufsetzflansch zum Befestigen auf der Oberseite des Blocks ab. Zwischen oberem Muffenstück und unterem Aufsetzflansch liegt ein Faltenbalg. Zur Sicherung des gehalterten Reaktionsgefässes und zur Erzeugung eines Anpressdrucks zwischen den aufeinanderliegenden Dichtflächen ist am Reaktionsgefäss ein Kragen vorhanden, von dem eine Klammer zum Muffenstück übergreift.

Der Strömungskanal für die Zuleitung des Temperiermediums tritt direkt im Bereich der auf der Oberseite befestigten elastischen Kupplung aus und setzt sich als ableitender Strömungskanal in das Innere der benachbarten Kupplung fort. In der benachbarten Kupplung erfüllt der von der vorherigen Kupplung kommende ableitende Strömungskanal zuleitende Funktion.

### • Vierte Ausführungsform

Diese Ausführungsform ist der dritten ähnlich. Jedoch ist an den Strömungskanal im Block ein in das Innere der Kupplung hineinragendes Strömungsrohr für die Zuleitung des Temperiermediums angeschlossen. Die Ableitung des Temperiermediums erfolgt über einen wegführenden Strömungskanal, der im Bereich der auf der Oberseite befestigten elastischen Kupplung mündet.

Dank der Erfindung steht nun eine vervollkommnete Vorrichtung zur Verfügung, die es erlaubt, die darin gehalterten Reaktionsgefässe zu temperieren und gleichzeitig zu schütteln sowie während dieser Vorgänge die Reaktionsgefässe mit einem Entnahme- und/oder Zugabeorgan zwecks Probenentnahme oder Zudosierung zu penetrieren. Das Entnahme- und/oder Zugabeorgan kann von einem Roboter geführt werden. Durch die Zirkulation des Temperiermediums in einem geschlossenen Kreislauf, können die Reaktionsgefässe über einen grossen Temperaturbereich temperiert werden, und zwar jedes Reaktionsgefäss parallel oder alle Reaktionsgefässe seriell.

### Kurzbeschreibung der beigefügten Zeichnungen

Es zeigen:

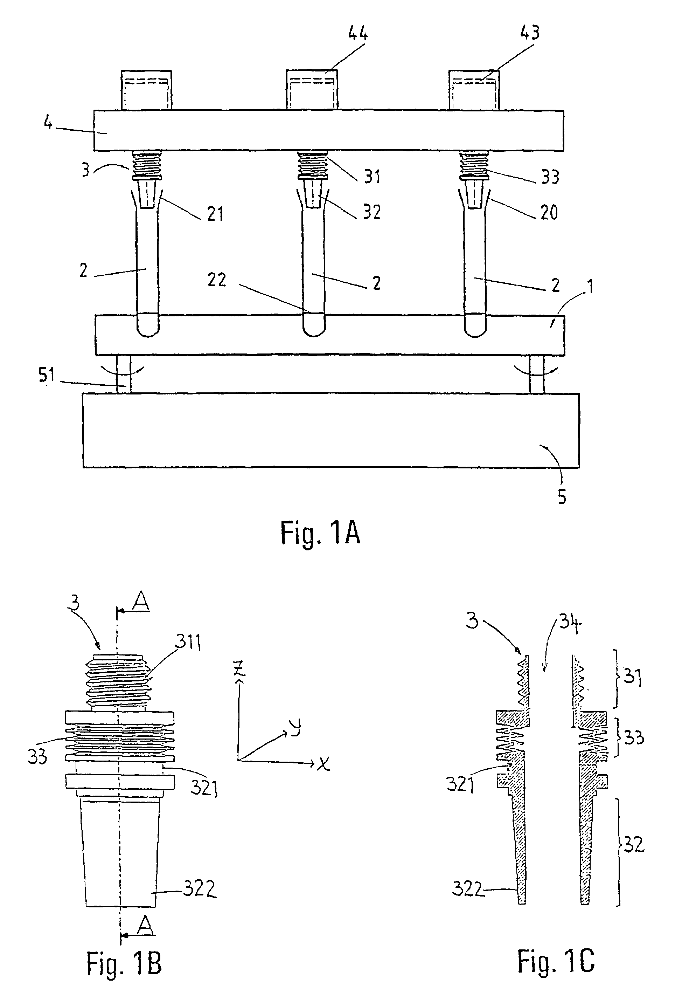

- Figur 1A -: eine erfindungsgemässe Vorrichtung mit einen Block, bestückt mit drei Reaktionsgefässen, deren Halspartien an flexiblen Kupplungen hängen und deren Bodenpartien von einer Temperiereinrichtung umgeben sind, sowie mit einer Schütteleinrichtung in schematischer Darstellung;
- Figur 1 B -: die flexible Kupplung aus Figur 1A in Frontansicht;
- Figur 1 C-: die flexible Kupplung gemäss Figur 1 B im Schnitt auf der Linie A-A;

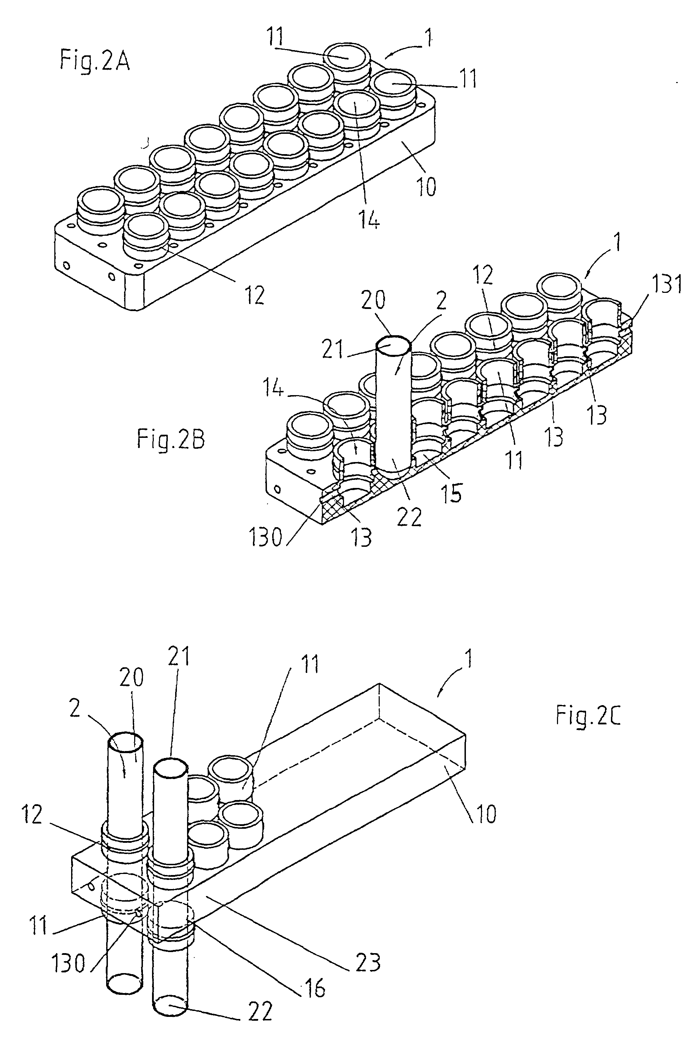

- Figur 2A-: der Block aus Figur 1A als flexible Kammer mit der Temperiereinrichtung und zwei Reihen von Aufnahmestutzen zum Einsetzen von Reaktionsgefässen mit ihrer Bodenpartie in einer ersten Ausführungsform als Perspektivansicht;
- Figur 2B -: die flexible Kammer gemäss Figur 2A mit einem eingesteckten Reaktionsgefäss als Vertikalschnitt;
- Figur 2C -: die flexible Kammer zum Einsetzen von Reaktionsgefässen mit ihrer Mittelpartie in einer zweiten Ausführungsform als Perspektivansicht;

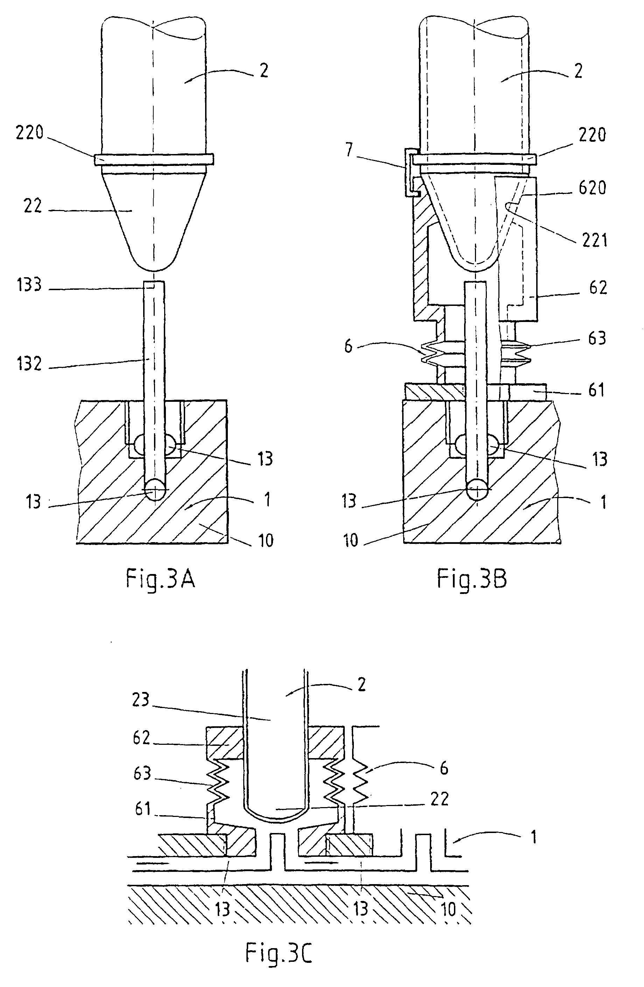

- Figur 3A -: einen Ausschnitt aus einem Block mit einem Reaktionsgefäss und dem Strömungsrohr zum Zuführen des Temperiermediums, in einer dritten Ausführungsform als Prinzipdarstellung;
- Figur 3B -: die Darstellung gemäss Figur 3A mit einer an der Bodenpartie des Reaktionsgefässes ansetzenden flexiblen Kupplung; und
- Figur 3C -: einen Ausschnitt aus einem Block mit einem Reaktionsgefäss, einer an der Bodenpartie des Reaktionsgefässes ansetzenden flexiblen Kupplung und Temperierkanälen zum Zuführen des Temperiermediums, in einer vierten Ausführungsform als Prinzipdarstellung.

### Ausführungsbeispiele

Mit Bezug auf die beiliegenden Zeichnungen erfolgt nachstehend die detaillierte Beschreibung von Ausführungsbeispielen zur erfindungsgemässen Vorrichtung.

Für die gesamte weitere Beschreibung gilt folgende Festlegung: sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder späteren Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figur 1A

Unterhalb eines starren Trägers **4** sind flexible Kupplungen **3** mit ihrem oberen, trägerseitigen Ende **31** angeordnet, die sich vertikal erstrecken und mit ihrem reaktionsgefässseitigen Ende **32** in der Halspartie **20** der Reaktionsgefässe **2** befestigt einmünden. Die Reaktionsgefässe **2** können am Träger **4** mit je einem Septum **43,** das jeweils durch ein Schraubenhütchen **44** aus Kunststoff fixiert ist, fest verschlossen werden. Zwischen den Enden **31**,**32** weist eine Kupplung **3** einen Faltenbalg **33** auf. Die flexiblen Kupplungen 3 erlauben ein Schütteln der Reaktionsgefässe **2** mit hoher Frequenz, wobei die Eintrittsöffnung **21** eines Reaktionsgefässes **2** ihre Position im wesentlichen beibehält, während die Bodenpartie **22** des Reaktionsgefässes **2** die wesentliche Auslenkung erfährt. Die Bodenpartien **22** stecken flexibel in einem Block **1,** der über Mitnehmer **51** mit einer Schütteleinrichtung **5** verbunden ist, wobei die Schüttelbewegung in Pfeilrichtung erfolgt. Das Reaktionsgefäss **2** unterliegt einer quasi kegeiförmigen Bewegung.

Der Block **1** enthält eine hier noch nicht dargestellte Temperiereinrichtung. Die Reaktionsgefässe **2** werden zusammen mit der Temperiereinrichtung geschüttelt, ohne dass sich die Schüttelbewegung auf den starren Träger **4** überträgt. Durch die Flexibilität der Kupplungen **3** auch in axialer Richtung, könnten auch starr miteinander verbundene Reaktionsgefässe **2** geschüttelt werden. Ein weiterer Vorteil besteht darin, dass nicht das ganze Gewicht der Reaktionsgefässe **2** inkl. Inhalt auf der Schütteleinrichtung **5** lastet, wodurch relativ gering dimensionierte Schütteleinrichtungen **5** ausreichen, die verhältnismässig schwache Vibrationen erzeugen. Dies erst ermöglicht den Einsatz von vibrationsempfindlichen Peripheriegeräten, wie z.B. Samplern, Robotern oder anderen Automationseinrichtungen zum Zuführen bzw. Entnehmen von Gasen, Flüssigkeiten oder Feststoffen. Ein essentieller Vorteil der erfindungsgemässen Vorrichtung liegt somit darin, auch während des Schütteins problemlos mit einem Zuführ- und/oder Entnahmewerkzeug, wie z.B. einer hohlen Nadel, einem Greifer oder einem Löffel, Flüssigkeit, Gas oder Feststoff dem Reaktionsgefäss **2** durch den starren Träger **4** und die Kupplung **3** hindurch zugegeben und/oder entnehmen zu können. Bei den bisher bekannten Vorrichtungen ist dies nicht oder nur sehr beschränkt möglich.

### Figuren 1B und 1C

Die flexible im Prinzip hülsenförmige Kupplung **3** umfasst das trägerseitige Ende **31** und das reaktionsgefässseitige Ende **32**, zwischen denen ein Faltenbalg **33** angeordnet ist. Der Faltenbalg **33** bewirkt die Beweglichkeit des reaktionsgefässseitigen Endes **32** gegenüber dem trägerseitigen Ende **31** in x-, y- und z-Richtung. Das trägerseitige Ende **31** weist ein Gewinde **311** auf, so dass die Kupplung **3** in ein mit einem Innengewinde versehenen Loch im Träger **4** eingeschraubt werden kann. Das reaktionsgefässseitige Ende **32** umfasst eventuell einen Fixierbereich **321** für das Anbringen von Befestigungsklammern und einen Normschliff **322** zum dichtenden, lösbaren Einsetzen in die Halspartie **20** eines Reaktionsgefässes **2**. Für den Durchgriff mit einem Instrument - z.B. ein Sampler - erstreckt sich axial durch die Kupplung **3** ein zentraler Durchgang **34.**

Die Kupplung kann beispielsweise aus Kunststoff oder einem Metall, insbesondere aus Teflon, Polypropylen, EPDM/PP (Ethylen-Propylen-Dien-Kautschuk) oder dünnem Stahlblech bestehen. Als Alternative zum Faltenbalg **33** können z.B. ein flexibles Rohr, ein Kugelgelenk oder ein zwei- oder mehrachsiges Gelenk verwendet werden.

### Figuren 2A und 2B

In einem ersten Ausführungsbeispiel ist der Block **1** als flexible Kammer aus einem möglichst flexiblen und in einem grossen Temperaturbereich stabilen Material - z.B. Silicon, dünnwandiges Teflon, Polypropylen oder EPDM/PP - gebildet. Der Block **1** besteht aus einer Basisplatte **10** aus der sich vertikal nach oben eine Vielzahl von stutzenförmigen zylindrischen Wänden **11** erstreckt. Die zylindrischen Wände **11** umschliessen jeweils eine Einstecköffnung **14**, die sich als Sackloch **15** bis in die Basisplatte **10** hinein erstreckt. Radial am Umfang der zylindrischen Wände **11** sind bridenartig Dichtungsringe **12** angebracht. Durch die Kammer zieht sich ein Strömungskanal **13**, welcher die Sacklöcher **15** miteinander verbindet. Die Einstecköffnungen **14** und die Sacklöcher 15 dienen der Aufnahme der Bodenpartien **22** der Reaktionsgefässe **2**, wobei die Dichtungsringe **12** ein Umspannen und damit Festhalten der Reaktionsgefässe **2** bewirken. Greift die Schütteleinrichtung **5** am Block **1** an, darf das verwendete Material nur in solchem Grad elastisch sein, dass die eingesteckten Reaktionsgefässe **2** beim Schütteln noch ausreichend mitgeführt werden. Der Strömungskanal **13** und das einzelne Sackloch **15** sind so ausgelegt, dass die Bodenpartie **22** eines eingesteckten Reaktionsgefässes **2** vom durch den Strömungskanal **13** geleiteten Temperiermedium umspült wird.

Bei der Verzweigung des Strömungskanals **13** stehen mehrere Alternativen zur Verfügung. In der einfachen Ausführung erstreckt sich der Strömungskanal **13** von einem Eintritt **130,** verbindet in Reihe alle Sacklöcher **15** miteinander und mündet an einem Austritt **131**. In einer parallelgeschalteten Anordnung verläuft der Strömungskanal **13** vom Eintritt **130** als Sammelzuleitung direkt zu allen Sacklöchern **15** und von dort in Ableitungen, welche in eine Sammelableitung einmünden und schliesslich am Austritt **131** enden. In einer weiteren Alternative wird der alle Sacklöcher **15** miteinander verbindende Strömungskanal **13** mit Temperiermedium beaufschlagt, während der Abfluss des Temperiermediums durch die Dichtungsringe **12** hindurch erfolgt.

Vorzugsweise besteht der ganze Block aus elastischem Material, zumindest jedoch die zylindrischen Wände **11** samt deren Umgebung. Beim Zuschalten der Schütteleinrichtung **5** werden die Reaktionsgefässe **2** einer Schüttelbewegung ausgesetzt. Die Halspartien **20** der Reaktionsgefässe **2** sind mit den elastischen Kupplungen **3** verbunden und vollführen kaum Bewegungen, während die Bodenpartien **22** eine kreisende Bewegung machen und hierbei innerhalb der zylindrischen, elastisch nachgiebigen Wände **11** gehalten werden.

### Figur 2C

Bei einem zweiten Ausführungsbeispiel ist der flexible Block **1** insofern abgewandelt, als sich nicht nur auf der Oberseite der Basisplatte **10** hochgezogene zylindrische Wände **11** befinden, sondern auch auf der Unterseite, und die Mittelpartien **23** der Reaktionsgefässe **2** im Block **1** stecken, während deren Halspartien **20** oben und deren Bodenpartien **22** unten aus dem Block **1** herausragen. In gleicher Weise erstreckt sich durch den Block **1**, beginnend am Eintritt **130** ein Strömungskanal **13,** so dass Temperiermedium nun die Mittelpartien **23** der Reaktionsgefässe **2** umspült. Zur gesicherten Halterung eines von den beidseitigen Wänden **11** umschlossenen und im Vertikaldurchgang **16** des Blocks **1** steckenden Reaktionsgefässes **2** sind alle Wände **11** von Dichtungsringen **12** umgeben.

### Figuren 3A und 3B

Die dritte Ausführungsform der Vorrichtung umfasst wiederum einen Block **1,** der nicht elastisch sein muss und im Prinzip nur aus der Basisplatte **10** besteht. Durch die Basisplatte **10** ziehen sich Strömungskanäle **13** für die Zuführung und die Rückleitung des Temperiermediums. Vom zuführenden Strömungskanal **13** erstrecken sich quasi als Verlängerung oben aus dem Block **1** herausragende Sfrömungsrohre **132.** Über dem Austritt **133** des Strömungsrohrs **132** ist das Reaktionsgefäss **2** an einer Kupplung **3** hängend angeordnet, so dass die Bodenpartie **22** dem Austritt **133** zugewandt ist. An der Bodenpartie **22** ist ein radial umlaufender Kragen **220** fest angeordnet.

Zur Überbrückung zwischen der Bodenpartie **22** des Reaktionsgefässes **2** und der Oberseite des Blocks **1** ist eine hülsenförmige, flexible Kupplung **6** vorgesehen. Die Kupplung **6** besitzt zuunterst einen Aufsetzflansch **61**, darüber einen Faltenbalg **63** und zuoberst ein Muffenstück **62** mit einer internen zirkulären Dichtfläche **620.** Im montierten Zustand ist die Kupplung **6** über das Strömungsrohr **132** gestülpt und der Aufsetzflansch **61** ist an der Oberseite des Blocks **1** befestigt. Die Bodenpartie **22** ist in das Muffenstück **62** eingesteckt, wobei dessen Dichtfläche **620** mit einer an der Bodenpartie **22** vorhandenen komplementären Dichtfläche **221** eine abgedichtete Formschlussverbindung bildet. Zur sicheren Halterung des Reaktionsgefässes **2** und Erzeugung eines Anpressdruckes zwischen den Dichtflächen **221**,**620** ist eine vom Muffenstück **62** auf den Kragen **220** übergreifende Klammer **7** vorgesehen.

Bei Zuschaltung der Schütteleinrichtung **5** werden die Bewegungen vom Block **1** über die flexiblen Kupplungen **6** auf die Reaktionsgefässe **2** übertragen. Hierbei ist die Kupplung **6** vorteilhafterweise in x-, y- und z-Richtung flexibel. Sofern der Faltenbalg **33** der oberen Kupplung **3** bereits die nötige z-Achsenflexibilität in die Vorrichtung einbringt, muss die untere Kupplung **6** zwingend nur in x- und y- Richtung flexibel sein, d.h. dann könnte man beim Faltenbalg **63** auf die z-Achsenflexibilität verzichten.

Über den Strömungskanal **13** zugeleitetes Temperiermedium spritzt aus dem Austritt **133** des Strömungsrohrs **132** gegen die Bodenpartie **22** des darüber positionierten Reaktionsgefässes **2** und fliesst über einen innerhalb des Aufsetzflansches **61** mündenden Strömungskanal **13** wieder ab. Auch bei dieser Ausführungsform unterliegt die Halspartie **20** mit der Eintrittsöffnung **21** des Reaktionsgefässes **2** kaum einer Bewegung, so dass der Zugriff - wie vorbeschrieben - ermöglicht wird.

### Figur 3C

In der vierten Ausführungsform wird kein Strömungsrohr **132** benötigt, sondern an der Oberfläche des Blocks **1**, der wiederum selbst nicht elastisch sein muss, treten zueinander benachbarte Strömungskanäle **13** für Zu- und Abfluss aus. Der Strömungskanal **13** für den Abfluss ist zugleich der Strömungskanal **13** für den Zufluss des nachfolgenden Reaktionsgefässes **2**. Die flexible Kupplung 6 ist mit ihrem Aufsetzflansch **61,** die Ausgänge der Strömungskanäle **13** für Zu- und Abfluss umschliessend, auf der Oberfläche des Blocks **1** befestigt. Zwischen unterem Aufsetzflansch **61** und oberem Muffenstück **62** befindet sich der Faltenbalg **63**, wobei das Reaktionsgefäss **2** nun tiefer mit der Bodenpartie **22** und der Mittelpartie 23 in das Innere der Kupplung **6** eingeschoben ist. Mittels Dichtflächen und eventuellen zusätzlichen Spannelementen wird die Abdichtung zwischen dem Muffenstück **62** und dem Reaktionsgefäss **2** bewirkt. Somit umspült ein über den Strömungskanal **13** einströmendes Temperiermedium das eingesetzte Reaktionsgefäss **2** und wird über den sich fortsetzenden Strömungskanal **13** zum benachbarten Reaktionsgefäss **2** weitergeleitet.

## Patentansprüche

1. Vorrichtung zur Halterung eines temperier- und schüttelbaren Reaktionsgefässes (**2**), vorzugswelse von einer Vielzahl in einen Block (**1**) zusammengefasster Reaktionsgefässe (**2**), mit
a) einem an die Reaktionsgefässe (**2**) herangeführten Strömungskanal (**13**) für die Zuleitung eines flüssigen Temperiermediums; und
b) einer Schütteleinrichtung (**5**) zur Bewegung der Reaktionsgefässe (**2**), **dadurch gekennzeichnet, dass** die Reaktionsgefässe (**2**)
c) oben an ihren Halspartien (**20**) jeweils mittels einer elastischen Kupplung (**3**) gehaltert sind; und
d) unterhalb ihrer Halspartien **(20)** in elastischen Mitteln (**1,10,11;6**) derart dicht gestützt sind, dass kein über den Strömungskanal (**13**) zugeleitetes flüssiges Temperiermedium entweichen kann.

2. Vorrichtung nach Anspruch 1, **dadurch gekennzeichnet, dass** die Schütteleinrichtung (**5**) an den unterhalb der Reaktionsgefässe (**2**) stützenden elastischen Mitteln (**1,10,11;6**) angreift.

3. Vorrichtung nach Anspruch 1 oder 2, **dadurch gekennzeichnet**,
a) dass die elastische Kupplung (**3**) aufweist:
aa) eine im Prinzip hülsenförmige Gestalt mit einem axialen Durchgang (**34**);
ab) ein oberes Ende (**31**), das mit einem Aussengewinde (**311**) versehen sein kann;
ac) ein unteres Ende (**32**), das einen Fixierbereich (**321**) und zuunterst einen Normschliff (**322**) aufweisen kann; und
ad) einen zwischen oberem Ende (**31**) und unterem Ende (**32**) gelegenen Faltenbalg (**33**); wobei
b) das obere Ende (**31**) an einem Träger (**4**) fixiert ist; und
c) das untere Ende (**32**) zumindest anteilig, vorzugsweise mit dem Normschliff (**322**), in die Eintrittsöffnung (**21**) der Halspartie (**20**) des Reaktionsgefässes (**2**) eingesteckt ist.

4. Vorrichtung nach einem der Ansprüche 1 bis 3, **dadurch gekennzeichnet, dass**
a) das die Reaktionsgefässe (**2**) unterhalb ihrer Halspartien (**20**) stützende elastische Mittel von einem Block (**1**) mit einer Vielzahl sich von dessen Ober-seite aufwärts erstreckenden zylindrischen, elastischen Wänden (**11**) gebildet wird, die als Aufnahmestutzen jeweils eine Einstecköffnung (**14**) aufweisen, die sich in den Block (**1**) hinein als Loch (**15**) fortsetzt;
b) jedes Loch (**15**) zur Aufnahme der Bodenpartie (**22**) eines Reaktionsgefässes (**2**) und jede zugehörige elastische Wand (**11**) zum radialen partiellen Umgreifen dieses Reaktionsgefässes (**2**) bestimmt sind; und
c) zu jedem Loch (**15**) der Strömungskanal (**13**) für die Zuleitung des Temperiermediums geführt ist, welches aus dem Strömungskanal (**13**) ausströmt und das jeweilige Reaktionsgefäss (**2**) umspült.

5. Vorrichtung nach einem der Ansprüche 1 bis 3, **dadurch gekennzeichnet, dass**
a) das die Reaktionsgefässe (**2**) unterhalb ihrer Halspartien (**20**) stützende elastische Mittel von einem Block (**1**) mit einer Vielzahl sich von dessen Oberseite aufwärts erstreckenden und von dessen Unterseite abwärts erstreckenden zylindrischen, elastischen Wänden (**11**) gebildet wird, die als zueinander fluchtende Aufnahmestutzen jeweils einen Vertikaldurchgang (**16**) aufweisen, um darin jeweils die Mittelpartie (**23**) eines Reaktionsgefässes (**2**) aufzunehmen; wobei
b) die Bodenpartien (**22**) der Reaktionsgefässe (**2**) aus den unteren elastischen Wänden (**11**) und die Halspartien (**20**) aus den oberen elastischen Wänden (**11**) herausragen;
c) jede elastische Wand (**11**) zum radialen partiellen Umgreifen dieses Reaktionsgefässes (**2**) bestimmt ist; und
d) zu jedem Vertikaldurchgang (**16**) der Strömungskanal (**13**) für die Zuleitung des Temperiermediums geführt ist, welches aus dem Strömungskanal (**13**) ausströmt und das jeweilige Reaktionsgefäss (**2**) umspült.

6. Vorrichtung nach Anspruch 4 oder 5, **dadurch gekennzeichnet, dass**
a) der Strömungskanal (**13**) zumindest an einem Eintritt (**130**) am Block (**1**) beginnt und zumindest an einem Austritt (**131**) am Block (**1**) endet;
b) der Strömungskanal (**13**) sich von einem Loch (**15**) zum benachbarten Loch (**15**) bzw. von einem Vertikaldurchgang (**16**) zum benachbarten Vertikaldurchgang (**16**) fortsetzt; und
c) der gesamte Block (**1**) aus elastischem Material besteht.

7. Vorrichtung nach einem der Ansprüche 1 bis 3, **dadurch gekennzeichnet, dass**
a) das die Reaktionsgefässe (**2**) unterhalb ihrer Halspartien **(20)** stützende elastische Mittel von einem Block (**1**) mit einer Vielzahl sich von dessen Oberseite aufwärts erstreckenden zylindrischen, elastischen Kupplungen (**6**) gebildet wird, die zumindest die Bodenpartie (**22**) des jeweiligen Reaktionsgefässes (**2**) aufnehmen und radial umgreifen; und
b) der Strömungskanal (**13**) für die Zuleitung des Temperiermediums, welches das jeweilige Reaktionsgefäss (**2**) umspült, in das Innere jeder Kupplung (**6**) geführt ist.

8. Vorrichtung nach Anspruch 7, **dadurch gekennzeichnet, dass**
a) die elastische Kupplung (**6**) aufweist:
aa) eine im Prinzip hülsenförmige Gestalt mit einem axialen Durchgang;
ab) ein oberes Muffenstück (**62**) mit einer Dichtfläche (**620**) zum abgedichteten Umgreifen des Reaktionsgefässes (**2**), welches zur Dichtfläche (**620**) am Muffenstück (**62**) eine komplementäre Dichtfläche (**221**) aufweist;
ac) einen unteren Aufsetzflansch (**61**) zum Befestigen auf der Oberseite des Blocks (**1**); und
ad) einen zwischen oberem Muffenstück (**62**) und unterem Aufsetzflansch **(61)** gelegenen Faltenbalg (**63**); wobei vorhanden sein kann:
b) am Reaktionsgefäss (**2**) ein Kragen (**220**); und
c) eine Klammer (**7**), die vom Muffenstück (**62**) auf den Kragen (**220**) übergreift, um das gehalterte Reaktionsgefäss (**2**) zu sichern und einen Anpressdruck zwischen den aufeinanderliegenden Dichtflächen (**221,620**) zu erzeugen.

9. Vorrichtung nach Anspruch 7 oder 8, **dadurch gekennzeichnet, dass**
a) der Strömungskanal (**13**) für die Zuleitung des Temperiermediurns direkt im Bereich der auf der Oberseite befestigten elastischen Kupplung (**6**) austritt und sich als ableitender Strömungskanal (**13**) in das Innere der benachbarten Kupplung (**6**) fortsetzt, wo er die Funktion als zuleitender Strömungskanal (**13**) erfüllt; oder
b) an den Strömungskanal (**13**) im Block (**1**) ein in das Innere der Kupplung (**6**) hineinragendes Strömungsrohr (**132**) für die Zuleitung des Temperiermediums angeschlossen ist, während dessen Ableitung über einen wegführenden Strömungskanal (**13**) erfolgt, der im Bereich der auf der Oberseite befestigten elastischen Kupplung (**6**) mündet.

## Claims

1. An apparatus for retaining a reaction vessel (2) which can be temperature-controlled and shaken, preferably a multiplicity of reaction vessels (2) combined in a block (1), having:
a) a flow channel (13) which is routed up to the reaction vessels (2) and is intended for supplying a liquid temperature-control medium; and
b) a shaking arrangement (5) for moving the reaction vessels (2), wherein the reaction vessels (2)
c) are retained in each case by means of an elastic coupling (3) at the top of their neck sections (20); and
d) are supported in a sealed manner in elastic means (1, 10, 11; 6) beneath their neck sections (20) such that it is not possible for any liquid temperature-control medium supplied via the flow channel (13) to escape.

2. The apparatus as claimed in claim 1, wherein the shaking arrangement (5) acts on the elastic means (1, 10, 11; 6) which provide a supporting function beneath the reaction vessels (2).

3. The apparatus as claimed in claim 1 or 2, wherein
a) the elastic coupling (3) has:
aa) a basically sleeve-like configuration with an axial through-passage (34);
ab) a top end (31) which may be provided with an external thread (311);
ac) a bottom end (32) which may have a fixing region (321) and, right at the bottom, a standard ground joint (322); and
ad) a folding bellows (33) located between the top end (31) and bottom end (32); it being the case that
b) the top end (31) is fixed on a carrier (4); and
c) the bottom end (32) is inserted at least in part, preferably by way of the standard ground joint (322), into the inlet opening (21) of the neck section (20) of the reaction vessel (2).

4. The apparatus as claimed in one of claims 1 to 3, wherein
a) the elastic means supporting the reaction vessels (2) beneath their neck sections (20) is formed by a block (1) with a multiplicity of cylindrical, elastic walls (11) which extend upward from the top side of said block and, as receiving stubs, each has an insertion opening (14) which continues into the block (1) as a hole (15);
b) each hole (15) is intended for receiving the base section (22) of a reaction vessel (2) and each associated elastic wall (11) is intended for engaging radially part of the way around said reaction vessel (2); and
c) the flow channel (13), for supplying the temperature-control medium, is routed to each hole (15), said temperature-control medium flowing out of the flow channel (13) and around the respective reaction vessel (2).

5. The apparatus as claimed in one of claims 1 to 3, wherein
a) the elastic means supporting the reaction vessels (2) beneath their neck sections (20) is formed by a block (1) with a multiplicity of cylindrical, elastic walls (11) which extend upward from the top side of said block and extend downward from the underside of said block and, as mutually aligned receiving stubs, each has a vertical through-passage (16) in order to receive in each case the central section (23) of a reaction vessel (2) therein; it being the case that
b) the base sections (22) of the reaction vessels (2) project out of the bottom elastic walls (11) and the neck sections (20) project out of the top elastic walls (11);
c) each elastic wall (11) is intended for engaging radially part of the way around said reaction vessel (2); and
d) the flow channel (13), for supplying the temperature-control medium, is routed to each vertical through-passage (16), said temperature-control medium flowing out of the flow channel (13) and around the respective reaction vessel (2).

6. The apparatus as claimed in claim 4 or 5, wherein
a) the flow channel (13) begins at least at one inlet (130) on the block (1) and ends at least at one outlet (131) on the block (1);
b) the flow channel (13) continues from one hole (15) to the adjacent hole (15) or from one vertical through-passage (16) to the adjacent vertical through-passage (16); and
c) the entire block (1) consists of elastic material.

7. The apparatus as claimed in one of claims 1 to 3, wherein
a) the elastic means supporting the reaction vessels (2) beneath their neck sections (20) is formed by a block (1) with a multiplicity of cylindrical, elastic couplings (6) which extend upward from the top side of said block and receive at least the base section (22) of the respective reaction vessel (2) and engage radially around the same; and
b) the flow channel (13), for supplying the temperature-medium, which flows around the respective reaction vessel (2), is routed into the interior of each coupling (6).

8. The apparatus as claimed in claim 7, wherein
a) the elastic coupling (6) has:
aa) a basically sleeve-like configuration with an axial through-passage;
ab) a top socket element (62) with a sealing surface (620) for engaging around the reaction vessel (2) in a sealed manner, said reaction vessel having a sealing surface (221) which is complementary to the sealing surface (620) on the socket element (62);
ac) a bottom attachment flange (61) for fastening on the top side of the block (1); and
ad) a folding bellows (63) located between the top socket element (62) and bottom attachment flange (61); it being possible to provide:
b) a collar (220) on the reaction vessel (2); and
c) a clamp (7) which engages over from the socket element (62) to the collar (220) in order to secure the retained reaction vessel (2) and to produce a contact pressure between the sealing surfaces (221, 620) located one upon the other.

9. The apparatus as claimed in claim 7 or 8, wherein
a) the flow channel (13), for supplying the temperature-control medium, emerges directly in the region of the elastic coupling (6) fastened on the top side and continues, as a discharging flow channel (13), into the interior of the adjacent coupling (6), where it fulfills the function of a supplying flow channel (13); or
b) a flow tube (132) which projects into the interior of the coupling (6) and is intended for supplying the temperature-control medium is connected to the flow channel (13) in the block (1), while said temperature-control medium is discharged via an outgoing flow channel (13) which opens out in the region of the elastic coupling (6) fastened on the top side.

## Revendications

1. Dispositif pour maintenir un récipient de réaction (2) apte à être thermostatisé et secoué, de préférence plusieurs récipients de réaction (2) rassemblés en un bloc (1), comportant :
a) un canal d'écoulement (13) amené aux récipients de réaction (2), pour l'apport d'un milieu liquide de thermostatisation ; et
b) un dispositif de secouage (5) pour mouvoir les récipients de réaction (2),
**caractérisé en ce que** les récipients de réaction (2)
c) sont maintenus dans le haut sur leur partie de col (20), chacun au moyen d'un moyen d'accouplement élastique (3) ; et
d) sont soutenus en dessous de leur partie de col (20) dans des moyens élastiques (1, 10, 11 ; 6) de manière étanche de telle sorte qu'un milieu liquide de thermostatisation apportée par le canal d'écoulement (13) ne puisse s'échapper.

2. Dispositif selon la revendication 1, **caractérisé en ce que** le dispositif de secouage (5) engage les moyens d'accouplement élastique (1, 10, 11 ; 6) qui soutiennent les récipients de réaction (2).

3. Dispositif selon la revendication 1 ou 2, **caractérisé en ce que**
a) l'accouplement élastique (3) présente :
aa) une forme de principe d'un manchon doté d'un passage axial (34) ;
ab) une extrémité supérieure (31) qui peut être dotée d'un filet extérieur (311) ;
ac) une extrémité inférieure (32) qui peut présenter une zone de fixation (321) en dessous de laquelle est disposé un tronçon poli normalisé (322) ; et
ad) un soufflet (33) disposé entre l'extrémité supérieure (31) et l'extrémité inférieure (32) ;
b) l'extrémité supérieure (31) étant fixée sur un support (4) ; et
c) au moins une partie, de préférence présentant le tronçon poli normalisé (322), de l'extrémité inférieure (32) étant insérée dans l'ouverture d'entrée (21) de la partie de col (20) du récipient de réaction (2).

4. Dispositif selon l'une des revendications 1 à 3, **caractérisé en ce que**
a) le moyen élastique qui soutient les récipients de réaction (2) en dessous de leur partie de col (20) est formé d'un bloc (1) doté d'une pluralité de parois élastiques cylindriques (11) qui s'étendent vers le haut à partir de la surface supérieure du bloc et qui présentent chacune comme appui de réception une ouverture d'insertion (14) qui se prolonge dans le bloc (1) sous la forme d'un trou (15) ;
b) chaque trou (15) est défini de manière à recevoir la partie de fond (22) d'un récipient de réaction (2) et chaque paroi élastique associée (11) est définie de manière à entourer radialement et partiellement ce récipient de réaction (2) ; et
c) le canal d'écoulement (13) pour l'amenée du fluide de thermostatisation qui sort de chaque canal d'écoulement (13) et qui balaye chaque récipient de réaction (2) est amené à chaque trou (15).

5. Dispositif selon l'une des revendications 1 à 3, **caractérisé en ce que**
a) le moyen élastique qui soutient les récipients de réaction (2) en dessous de leur partie de col (20) est formé d'un bloc (1) doté d'une pluralité de parois élastiques cylindriques (11) qui s'étendent vers le haut à partir de la surface supérieure du bloc et vers le bas à partir de sa surface inférieure, et qui présentent chacun comme raccords de réception alignés les uns sur les autres un passage vertical (16) défini de manière à recevoir chaque fois la partie centrale (23) d'un récipient de réaction (2) ;
b) les parties de fond (22) des récipients de réaction (2) débordent hors des parois élastiques inférieures (11) et les parties de col (20) hors des parois élastiques supérieures (11) ;
c) chaque paroi élastique (11) est destinée à entourer radialement partiellement ce récipient de réaction (2) ; et
d) le canal d'écoulement (13) pour l'amenée du fluide de thermostatisation qui sort du canal d'écoulement (13) et qui balaye chaque récipient de réaction (2) est amené à chaque passage vertical (16).

6. Dispositif selon les revendications 4 ou 5, **caractérisé en ce que**
a) le canal d'écoulement (13) commence au moins à une entrée (130) du bloc (1) et se termine au moins à une sortie (131) du bloc (1) ;
b) le canal d'écoulement (13) se prolonge depuis un trou (15) jusqu'au trou (15) voisin ou depuis un passage vertical (16) jusqu'au passage vertical (16) voisin ; et
c) l'ensemble du bloc (1) est réalisé en un matériau élastique.

7. Dispositif selon l'une des revendications 1 à 3, **caractérisé en ce que**
a) le moyen élastique qui soutient les récipients de réaction (2) en dessous de leur partie de col (20) est formé par un bloc (1) doté d'une pluralité d'accouplements élastiques cylindriques (6) qui s'étendent vers le haut à partir de la surface supérieure du bloc et qui reçoivent au moins la partie de fond (22) de chaque récipient de réaction (2) et l'entourent radialement ; et
b) le canal d'écoulement (13) pour l'amenée du fluide de thermostatisation qui balaye chaque récipient de réaction (2) est guidé à l'intérieur de chaque accouplement (6).

8. Dispositif selon la revendication 7, **caractérisée en ce que**
a) l'accouplement élastique (6) présente :
aa) une forme de principe d'un manchon doté d'un passage axial ;
ab) une pièce de manchon (62) dotée d'une surface d'étanchéité (620) pour entourer de façon étanche le récipient de réaction (2) qui présente une surface d'étanchéité (221) complémentaire de la surface d'étanchéité (620) de la pièce de manchon (62) ;
ac) une bride inférieure de pose (61) destinée à être fixée sur le côté supérieur du bloc (1) ; et
ad) un soufflet (63) placé entre la pièce supérieure de manchon (62) et la bride inférieure de pose (61) ;
b) un collet (220) pouvant être prévu sur le récipient de réaction (2), et
c) une pince (7), partant de la pièce de manchon (62), chevauchant le collet (220) pour fixer le récipient de réaction (2) maintenu et exercer une force de pressage entre les surfaces d'étanchéité (221, 620).

9. Dispositif selon les revendications 7 ou 8, **caractérisé en ce que**
a) le canal d'écoulement (13) pour l'amenée du fluide de thermostatisation sort directement dans la région de l'accouplement élastique (6) fixé sur le côté supérieur, et se prolonge comme canal d'écoulement (13) d'évacuation à l'intérieur de l'accouplement (6) voisin où il assure la fonction de canal d'écoulement (13) d'amenée ; ou
b) un tube d'écoulement (132) pour l'amenée du fluide de thermostatisation, pénétrant à l'intérieur de l'accouplement (6), est raccordé au canal d'écoulement (13) dans le bloc (1), son évacuation s'effectuant par un canal d'écoulement (13) de sortie qui débouche dans la région de l'accouplement élastique (6) fixé sur le côté supérieur.
